# EUROPÄISCHE PATENTSCHRIFT

(11) **EP 0 517 651 B1**
(45) Veröffentlichungstag und Bekanntmachung des Hinweises auf die Patenterteilung: **06.03.1996**
(21) Anmeldenummer: 92810366.2
(22) Anmeldetag: 15.05.1992
(51) Int. Cl.: B23Q 7/14, B23Q 3/155, B23Q 7/10

(54) **Fabrikationsanlage**
Manufacturing installation
Installation de production

(30) Priorität: 03.06.1991 DE 4118108
(43) Veröffentlichungstag der Anmeldung: 09.12.1992
(73) Patentinhaber: Erowa AG, CH-5734 Reinach (CH)
(72) Erfinder: Obrist, Basil, CH-5728 Gontenschwil (CH)
(74) Vertreter: Rottmann, Maximilian R.

(56) Entgegenhaltungen:
- EP-A- 0 062 267
- US-A- 4 597 709
- PATENT ABSTRACTS OF JAPAN vol. 8, no. 276 (M-346)(1713) 18. Dezember 1984 & JP-A-59 146 727 (Murata Kikai K.K.) 22. August 1984
- WERKSTATT UND BETRIEB Bd. 119, Nr. 8, 1. August 1986, MüNCHEN Seiten 672 - 674; VICTOR F. POIGNANT: 'flexibles fertigungssystem im flugzeugbau'

## Beschreibung

In den EP 0132599 A1 und EP 0297034 A2 sind Fabrikationsanlagen beschrieben, die Magazinstationen mit fest stationierten Drehregalen aufweisen, welche auch unter der Bezeichnung "Mehrebenen-Rundtaktspeicher" bekannt sind. Für den mannlosen, zeitlich ausgedehnten Betrieb einer solchen Fabrikationsanlage ist unter Umständen, insbesondere bei schnell wechselnden Fertigungsaufgaben, eine grosse Zahl von Werkstücken und Werkzeugen bereitzustellen, wozu verhältnismässig grosse Magazinräume und entsprechend weiträumig arbeitende Handhabungsgeräte zur Verfügung stehen müssen. Nach dem Stand der Technik sind zur Bedienung einer oder mehrerer Bearbeitungsmaschinen für diesen Fall oft mehrere Mehrebenen-Rundtaktspeicher und z.B. ein Portalroboter als Handhabungsgerät erforderlich, wie beispielsweise aus dem Aufsatz "Möglichkeiten und Trends bei der automatischen Werkstückhandhabung mit Industrierobotern" in der Zeitschrift "wt-Z.ind.Fertig.76(1986)Nr.10, S. 585-589 (Springer-Verlag)" hervorgeht. Der Materialaufwand und der Platzbedarf für die in einem solchen Umfang erforderlichen Hilfseinrichtungen sind erfahrungsgemäss beträchtlich. Ferner dauert der Betriebsunterbruch für die am Magazinstandort vorgenommene Erneuerung des Magazinbestandes dem Umfang des Magazinraumes entsprechend lang.

Die Erfindung betrifft demgegenüber eine Fabrikationsanlage mit wenigstens einer Fertigungszelle, welche wenigstens eine Bearbeitungseinrichtung, eine der Fertigungszelle zugeordnete Magazinstation mit mehreren, als transportfähige Baueinheiten ausgebildeten Drehregalen zur Aufnahme von Werkzeugen und/oder Werkstücken und ein Handhabungsgerät zur Bedienung der Magazinstation umfasst, wobei jedes Drehregal mehrere, rund um eine drehbare Säule übereinander angeordnete Lagerebenen und im unteren Säulenbereich einen Auflageteller aufweist und austauschbar in einen stationären, die Mittel zum Betrieb eines Drehregals enthaltenden Teil der Magazinstation einsetzbar ist, ferner mit einer von der Fertigungszelle getrennten Umladestation zum Beladen und Entladen der Drehregale und wenigstens einem Flurförderfahrzeug für den Transport der Drehregale von der Umladestation zur Magazinstation und umgekehrt.

Eine Fabrikationsanlage dieser Art ist z.B. aus der Patentschrift JP-A-59 146 727 bekannt. Darin ist eine Magazinstation beschrieben, welche sich in der Nähe einer Werkzeugmaschine befindet und dazu bestimmt ist, den Werkzeugvorrat der Werkzeugmaschine nach Bedarf zu ergänzen bzw. auszutauschen. Diese Magazinstation ist dafür eingerichtet, mehrere transportable Drehregale aufzunehmen und diese einzeln in den Zugriffsbereich eines der Magazinstation zugeordneten Handhabungsgerätes zu bringen, welches seinerseits einem ausgewählten Drehregal Werkzeuge entnehmen und dem maschineneigenen Werkzeugmagazin zuführen kann, und umgekehrt.

Zu diesem Zweck weist diese Magazinstation an einem stationären Untersatz ein drehbares Traggestell sowie eine anhebbare Antriebsvorrichtung auf. Jedes Drehregal ist mit einem im unteren Säulenbereich angeordneten Auflageteller auf das Traggestell aufsetzbar und in einer bestimmten Drehwinkellage des Traggestells mit einem unterhalb des Tragtellers befindlichen Säulenschaft an die Antriebsvorrichtung ankuppelbar. Im Betrieb der Drehregale und beim Transports derselben hat der Tragteller keine Funktion. Die beschriebene Magazinstation bildet eine zusätzliche Zwischenstation.

Aus der Patentschrift US-A-4 597 709 ist ferner eine Fördereinrichtung bekannt, welche zur Übergabe einer Palette für Werkzeuge oder Werkstücke von einem Schienenfahrzeug an eine Bearbeitungseinrichtung, und umgekehrt, bestimmt ist. Diese Fördereinrichtung befindet sich auf dem Schienenfahrzeug und besitzt eine Kupplungseinrichtung, an welche die Palette für den jeweiligen Transfer angekuppelt wird. Für die Paletten ist kein der Bearbeitungseinrichtung zugeordnetes Magazin vorgesehen.

Der Erfindung bezweckt, eine Fabrikationsanlage der genannten Art durch eine Änderung des Konzepts in bezug auf den Materialumschlag zu verbessern und hinsichtlich der Hilfseinrichtungen zu vereinfachen. Dabei soll der Transfer der Drehregale von der Magazinstation zum Flurförderfahrzeug und von diesem zur Umladestation und umgekehrt erleichtert werden und allenfalls automatisierbar sein.

Die Lösung dieser Aufgabe besteht gemäss der Erfindung darin, dass die Magazinstation in unmittelbarer Reichweite eines für den automatischen Werkzeug- bzw. Werkstückwechsel an der Bearbeitungseinrichtung bestimmten Handhabungsgerätes angeordnet ist und am stationären Teil einen Aufnahmeplatz für ein austauschbares Drehregal aufweist, dass die Drehregale am unteren Ende der Säule einen die Antriebs- und Transportbasis bildenden Fussteller aufweisen, dass auf dem Flurförderfahrzeug und in der Umladestation Aufnahmeplätze für je ein Drehregal eingerichtet sind, wobei die betreffenden Aufnahmeplätze am Fussteller der Drehregale wirksame Halterungsmittel für den Transport bzw. für die Handhabung der Drehregale in der Umladestation aufweisen, und dass am Aufnahmeplatz der Magazinstation und an den Aufnahmeplätzen des Flurförderfahrzeugs und der Umladestation je eine Fördereinrichtung mit horizontaler Förderbahn für den Transfer von in aufrechter Stellung darauf abgestellten Drehregalen von der Magazinstation zum Flurförderfahrzeug und von diesem zur Umladestation und umgekehrt vorgesehen ist, wobei die Förderbahnen aller Fördereinrichtungen das gleiche Niveau haben und die Fördereinrichtungen bei einem Transfer jeweils paarweise zusammenarbeiten.

Auf diese Weise ist es möglich, an der Magazinstation ein kleineres Speichervolumen und für die Bedienung der Bearbeitungsmaschinen ein einfacheres Handhabungsgerät vorzusehen. Dadurch lässt sich auch die Zugriffszeit zum Magazin verkürzen. Das auswechselbare Magazin kann periodisch bzw. nach Bedarf durch solches mit neuen Werkstücken bzw. Werkzeugen ersetzt und ausserhalb der Magazinstation entladen und neu beladen werden. Dabei kann der Magazinaustausch ohne Unterbrechung des laufenden Fabrikationsvorgangs stattfinden. In einer Fabrikationsanlage mit mehreren Fertigungszellen lassen sich die letzteren betriebsmässig miteinander verknüpfen, indem die Bahn der Transportmittel an allen Fertigungszellen vorbeiführt und die mit den entsprechenden Objekten beladenen Magazine mit Hilfe der Transportmittel von Fertigungszelle zu Fertigungszelle weitergeleitet werden.

Zur Einrichtung eines Aufnahmeplatzes der Umladestation gehören mit Vorteil ein Drehgestell und eine Hubeinrichtung zum Umlagern eines Drehregals von der Fördereinrichtung auf das Drehgestell und umgekehrt. Dabei kann die Anordnung so getroffen sein, dass ein mit dem Fussteller auf das Drehgestell aufgesetztes Drehregal frei drehbar ist, damit es einfach und bequem manuell beladen und entladen werden kann. Das Drehgestell kann zu diesem Zweck einen Satz im Kreis angeordneter Laufrollen und einen in eine Zentriermuffe am Drehregal-Fussteller einzugreifen bestimmten Achszapfen aufweisen, wobei der Laufrollensatz und der Achszapfen durch die Hubeinrichtung einzeln vertikal verschiebbar sind. Im übrigen enthalten die verschiedenen Fördereinrichtungen vorzugsweise Hilfsmittel, welche gewährleisten, dass die Drehregale an den jeweiligen Stationen die gewünschte Position erreichen bzw. beibehalten. So sind beispielsweise längs der Förderbahn aller Fördereinrichtungen am Umfang des Fusstellers wirksame Führungsschienen für die Längsführung des Drehregals vorhanden. Ferner kann die Förderbahn der Fördereinrichtungen, welche der Magazinstation und der Umladestation zugeordnet sind, einen Endanschlag aufweisen, welcher das auflaufende Drehregal im Wirkungsbereich der jeweiligen Halterungsmittel stillsetzt. Schliesslich können längs der Förderbahn der dem Flurförderfahrzeug zugeordneten Fördereinrichtung den Fussteller des aufgesetzten Drehregals übergreifende Halteleisten vorgesehen sein, welche ein Kippen des Drehregals verhindern.

Die praktische Ausführung der Magazinstation besteht z.B., gemäss einem in der EP-A-0 517 652 offenbarten Vorschlag, darin, dass diese ein Gestell aufweist, an dem lösbare, mit den beiden Enden der drehbaren Säule des Drehregals zusammenarbeitende Kupplungsmittel für die Lagerung und den Antrieb des Drehregals angebracht sind.

Eine bevorzugte Ausführungsform des Magazins ist dadurch gekennzeichnet, dass die drehbare Säule des Drehregals an ihrem unteren Ende einen die Antriebs- und Transportbasis bildenden Fussteller aufweist, und ferner dadurch, dass die drehbare Säule des Drehregals am Fussteller eine nach unten offene Zentriermuffe und an ihrem oberen Ende einen Zentrierkonus aufweist, dass sich im unteren Teil des Gestells ein angetriebener, mit einem nach oben gerichteten Zentrierzapfen versehener Drehschemel befindet, auf den das Drehregal aufgesetzt ist, wobei der Fussteller des Drehregals auf dem Drehschemel ruht und dessen Zentrierzapfen in die Zentriermuffe des Fusstellers eingreift, dass an der Oberseite des Gestells ein Wellenstumpf mit nach unten offener konischer Zentrierbohrung für die Aufnahme des Zentrierkonus der Säule frei drehbar gelagert ist, und dass der Drehschemel samt Drehantrieb an einem Hubtisch gelagert ist, welcher das eingesetzte Drehregal unter Krafteinwirkung nach oben drückt, so dass dessen Säule zwischen dem Drehschemel und dem Wellenstumpf formschlüssig und positionsgerecht gehalten und der Fussteller mit dem Drehschemel reibschlüssig verbunden ist.

Dabei ist die Anordnung vorzugsweise so getroffen, dass das Drehregal aus der Betriebslage mit dem Fussteller auf die Förderbahn absenkbar ist und die Kupplungsmittel beim Lösen vom Drehregal dieses für eine Bewegung in Förderrichtung freigeben.

Die Mittel für die Umsetzung des Drehregals aus der Betriebslage in die Transportlage sind beispielsweise so gestaltet, dass der Hubtisch aus der Betriebslage so weit absenkbar ist, dass der Zentrierzapfen am Drehschemel nach dem Aufsetzen des Drehregals auf die Fördereinrichtung mit der Zentriermuffe am unteren Säulenende ausser Eingriff kommt, und dass der Wellenstumpf nach oben wegziehbar ist, um den Zentrierkonus am oberen Säulenende mit der Zentriebohrung am Wellenstumpof ausser Eingriff zu bringen, so dass die Lösung des Drehregals von den Kupplungsmitteln in zwei Phasen erfolgen kann, wobei in der ersten Phase das Drehregal unter Fortwirkung der oberen Kupplungsmittel mit seinem Fussteller auf die Fördereinrichtung aufgesetzt wird und die unteren Kupplungsmittel gelöst werden und in der anschliessenden zweiten Phase die oberen Kupplungsmittel vom Drehregal gelöst werden.

In der Zeichnung sind Ausführungsbeispiele der Erfindung dargestellt, und zwar zeigen:
- Fig. 1: Frontansicht eines Magazins mit austauschbarem Drehregal;
- Fig. 2: Seitenansicht des Magazins;
- Fig. 3: Grundriss des Magazins;
- Fig. 4: Seitenansicht des austauschbaren, als transportfähi ge Baueinheit ausgebildeten Drehregals;
- Fig. 5: Frontansicht nach Fig. 1, mit auf die Fördereinrich tung abgesenktem und von den Kupplungsmitteln frei gegebenem Drehregal;
- Fig. 6: Schnittansicht der unteren Kupplungsmittel in grösserem Massstab, im Betriebszustand;
- Fig. 7: Schnittansicht gemäss Fig. 6, Kupplungsmittel im ge lösten Zustand;
- Fig. 8: Schnittansicht der oberen Kupplungsmittel in grösse rem Massstab, im Betriebszustand;
- Fig. 9: Schnittansicht gemäss Fig. 8, Kupplungsmittel im ge lösten Zustand;
- Fig. 10: Frontansicht eines Aufnahmeplatzes an der Umlade station;
- Fig. 11: Grundriss des Aufnahmeplatzes nach Fig. 10;
- Fig. 12: Grundriss eines Flurförderfahrzeugs mit zwei Aufnahmeplätzen für je ein Drehregal
- Fig. 13: Seitenansicht des Flurförderfahrzeugs nach Fig. 12;
- Fig. 14: Schematische Darstellung einer Fertigungszelle mit einer Bearbeitungsmaschine, einer Magazinstation und einem Handhabungsgerät, sowie eines Flurförderfahrzeugs;
- Fig. 15: Schematische Darstellung einer Fabrikationsanlage mit mehreren Fertigungszellen, mehreren Flurförderfahrzeugen, einer Umladestation und einem Pufferlager.

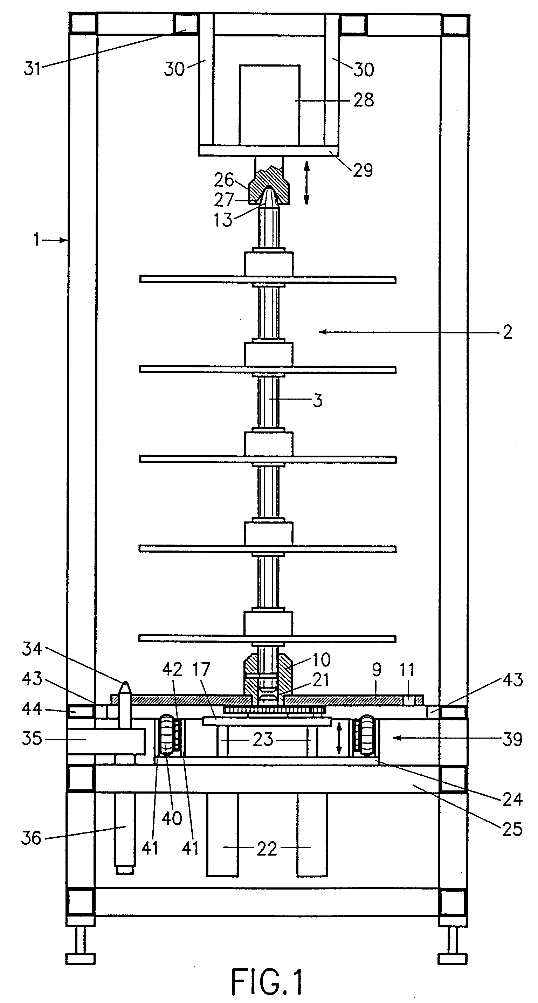

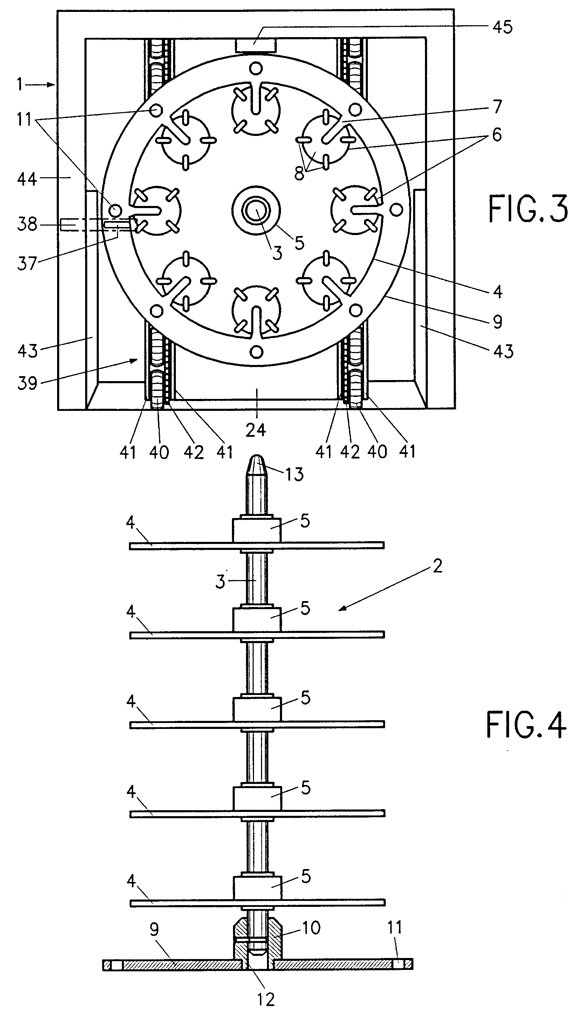

Das als Ausführungsbeispiel gewählte Magazin mit austauschbarem Drehregal nach den Fig. 1 bis 9 besitzt an der Magazinstation ein gesamthaft mit 1 bezeichnetes, aus Vierkantrohren aufgebautes Gestell, welches einen quadratischen Grundriss und eine dem in Fig. 4 separat dargestellten Drehregal 2 entsprechende Höhe aufweist und welches den stationären, die Mittel für den Rundtaktbetrieb enthaltenden Teil des Magazins trägt. Die einzelnen Teile dieses Gestells 1 werden im Verlauf der Beschreibung nach Bedarf näher bezeichnet.

Gemäss Fig. 4 besteht das gesamthaft mit 2 bezeichnete Drehregal in an sich bekannter Weise im wesentlichen aus einer drehbaren Säule 3, an welcher die Träger 4 der zu handhabenden Objekte (Werkstücke und/oder Werkzeuge) in Form von runden Scheiben in mehreren Ebenen mit gleichmässigen Höhenabständen befestigt sind. Die Objektträger 4 sind zu diesem Zweck mit je einer Nabe 5 versehen, welche in nicht näher dargestellter Weise, z.B. durch Verstiftung, an der Säule 3 verankert ist. Gemäss Fig. 3 verfügt jeder Objektträger 4 an seinem Umfang über eine Anzahl (z.B. acht) unter sich gleich ausgebildeter Lagerplätze 6, welche beispielsweise durch einen radialen Einschnitt 7 und achsiale Vertiefungen 8 für eine positionsgerechte Plazierung von Objekten mit einheitlicher Halterung gekennzeichnet sind.

Die drehbare Säule 3 des Drehregals 2 weist an ihrem unteren Ende einen die Antriebs- und Transportbasis bildenden Fussteller 9 auf, welcher in ähnlicher Weise wie die Objektträger 4 mit einer Nabe 10 an der Säule 3 verankert sein kann. Dieser Fussteller 9 hat einen etwas grösseren Durchmesser als die Objektträger 4 und ist nahe seines Umfangs mit einer Anzahl (z.B. acht) Rastlöchern 11 versehen, welche zur Positionierung des Drehregals 2 in verschiedenen Drehlagen dienen. Die am unteren Ende der Säule 3 befindliche Nabe 10 bildet zugleich eine nach unten offene Zentriermuffe 12, und an ihrem oberen Ende weist die Säule 3 einen Zentrierkonus 13 auf.

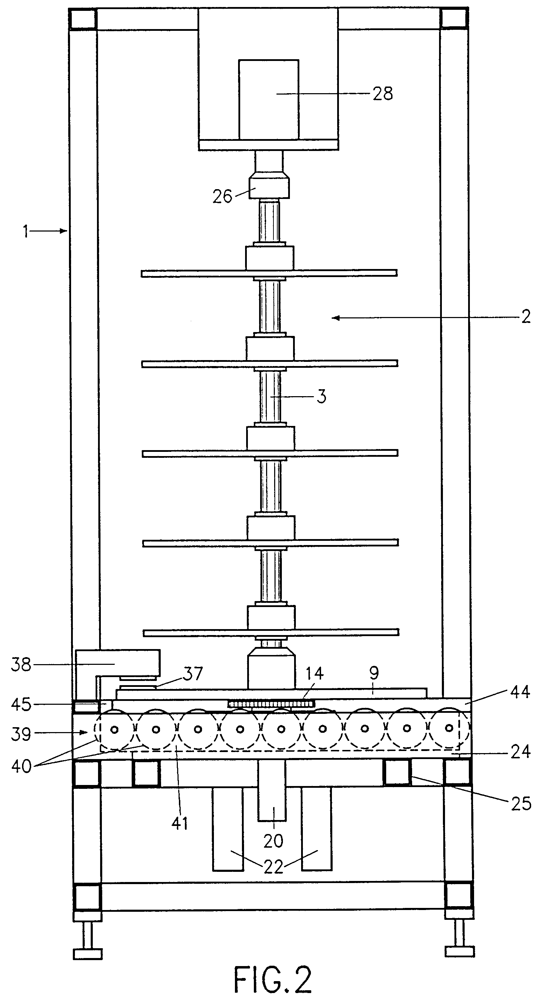

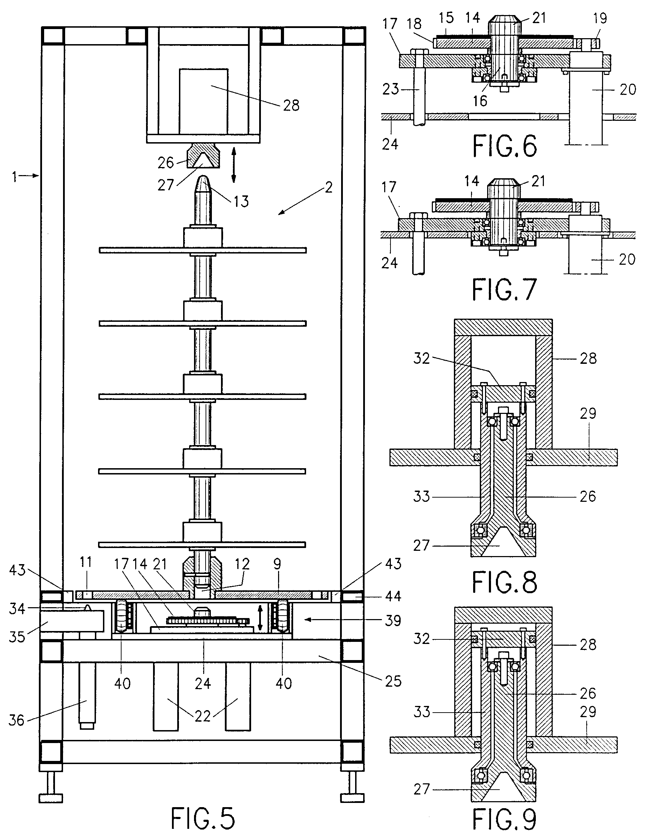

Für die Lagerung und den Antrieb des Drehregals 2 sind am Gestell 1 montierte Kupplungsmittel vorgesehen, welche mit den in der beschriebenen Weise ausgebildeten Enden der Säule 3 zusammenarbeiten. Im unteren Teil des Gestells 1 befindet sich ein Drehschemel 14, auf dem das Drehregal 2 in der Betriebslage mit seinem Fussteller 9 gemäss den Fig. 1 und 2 aufliegt. Einzelheiten dieses Drehschemels 14 gehen aus den Fig. 6 und 7 hervor. Zur reibschlüssigen Verbindung zwischen Drehregal 2 und Drehschemel 14 ist auf den letzteren ein Reibbelag 15 aufgebracht. Der Drehschemel 14 sitzt auf einer Welle 16 und ist mit dieser an einem Hubtisch 17 in der dargestellten Weise drehbar gelagert. Zum Antrieb des Drehschemels 14 ist dieser an seinem Umfang mit einer Verzahnung 18 versehen, in welche ein Ritzel 19 eines elektrischen Antriebsmotors 20 eingreift, der am Hubtisch 17 befestigt ist. Das obere Ende der Welle 16 bildet einen nach oben ragenden Zentrierzapfen 21, welcher in die Zentriermuffe 12 am Fussteller 9 des aufgesetzten Drehregals 2 eingreift (Fig. 1). Für die Höhenverstellung des Hubtisches 17 sind vier Arbeitszylinder 22 vorgesehen, welche mit einem Druckmedium beaufschlagbar sind und deren Kolbenstangen 23 mit dem Hubtisch 17 verbunden sind. Die Arbeitszylinder 22 sind an der Unterseite einer Grundplatte 24 montiert, welche ihrerseits auf einem Rahmenteil 25 des Gestells 1 ruht.

Die oberen Kupplungsmittel bestehen gemäss Fig. 1 aus einem drehbaren und vertikal verschiebbaren Wellenstumpf 26, welcher mit einer nach unten offenen konischen Zentrierbohrung 27 zur Aufnahme des Zentrierkonus 13 der Säule 3 des Drehregals 2 versehen ist. Der Wellenstumpf 26 ist in einem Antriebsblock 28 gelagert, welcher auf einer Plattform 29 ruht, die ihrerseits mit Stützplatten 30 an einem oberen Rahmenteil 31 des Gestells 1 verankert ist. Wie aus den Fig. 8 und 9 im einzelnen hervorgeht, handelt es sich bei dem Antriebsblock 28 um einen schematisch dargestellten Arbeitszylinder mit einem druckbeaufschlagten Kolben 32, wobei der Wellenstumpf 26 in der hohlen Kolbenstange 33 frei drehbar gelagert ist.

Im Betriebszustand des Magazins befindet sich der Hubtisch 17 unter der Krafteinwirkung der Arbeitszylinder 22 in einer oberen Endstellung (Fig. 1, 2 und 6), und der unter Druck stehende Arbeitszylinder 28 drückt den Wellenstumpf 26 mit entgegengesetzter Kraftrichtung gegen das obere Ende 13 der Säule 3. Dabei befindet sich der Zentrierzapfen 21 am Drehschemel 14 im Eingriff mit der Zentriermuffe 12 am unteren Ende der Säule 3 und der Zentrierkonus 13 am oberen Ende der Säule 3 im Eingriff mit der konischen Zentrierbohrung 27 des Wellenstumpfes 26, so dass die Säule 3 zwischen dem Drehschemel 14 und dem Wellenstumpf 26 formschlüssig und positionsgerecht gehalten und der Fussteller 9 mit dem Drehschemel 14 reibschlüssig verbunden ist.

Zum Fixieren des Drehregals 2 in den für die Entnahme der Lagerobjekte durch das Handhabungsgerät vorgesehenen Winkelstellungen ist in an sich bekannter Weise ein vertikal beweglicher Raststift 34 vorgesehen, welcher mit den Rastlöchern 11 im Fussteller 9 des Drehregals 2 zusammenarbeitet und durch einen mit dem Gestell 1 über einen Tragarm 35 verbundenen Arbeitszylinder 36 betätigbar ist (Fig. 1). Ausserdem befindet sich am Rande des Fusstellers 9 eine elektronische Speichereinrichtung 37, welche unter anderem Daten zur Identifikation des eingesetzten Drehregals enthält, die durch eine am Gestell 1 montierte Leseeinrichtung 38 abgelesen werden können (Fig. 2).

Für den Austausch des Drehregals 2 ist am stationären Teil des Magazins eine Fördereinrichtung 39 mit horizontaler Förderbahn vorgesehen, auf welche das Drehregal 2 absenkbar ist. Es handelt sich dabei um einen auf der Grundplatte 24 angeordneten Rollenförderer, dessen Rollen 40 in planparallelen Stützplatten 41 gelagert und über Ketten 42 durch einen gemeinsamen, nicht dargestellten Antriebsmotor angetrieben werden. Längs der Förderbahn sind am Umfang des Fusstellers 9 wirksame Führungsschienen 43 für die Längsführung des Drehregals 2 vorhanden, welche Führungsschienen 43 an einem Rahmenteil 44 des Gestells 1 befestigt sind (Fig. 1 und 3). Am gleichen Rahmenteil 44 ist auch ein Endanschlag 45 angebracht (Fig. 2 und 3), an welchem der Fussteller 9 anstösst, wenn ein Drehregal 2 auf der Fördereinrichtung 39 in das Gestell 1 eingefahren wird, so dass das Drehregal 2 im Zentrierbereich stillgesetzt wird, damit der Zentrierzapfen 21 in die Zentriermuffe 12 und der Zentrierkonus in die konische Zentrierbohrung 27 einfahren kann.

Die Entnahme eines Drehregals 2 aus dem Magazin geschieht in der Weise, dass zunächst das Drehregal 2 aus der in den Fig. 1 bis 3 dargestellten Betriebslage in die in Fig. 5 dargestellte Transportlage, d.h. auf die Fördereinrichtung 39 abgesenkt wird. Der Hubtisch 17 ist dabei so weit absenkbar, dass der Zentrierzapfen 21 am Drehschemel 14 nach dem Aufsetzen des Fusstellers 9 auf die Rollen 40 mit der Zentriermuffe 12 am unteren Ende der Säule 3 ausser Eingriff kommt. Der Arbeitszylinder 28 bleibt dabei noch unter Druck, so dass die Führungswirkung am oberen Säulenende während der Senkbewegung des Drehregals 2 erhalten bleibt. Danach wird der Wellenstumpf 26 durch Gegendruck im Arbeitszylinder 28 hochgezogen, um den Zentrierkonus 13 am oberen Säulenende mit der Zentrierbohrung 27 im Wellenstumpf 26 ausser Eingriff zu bringen. Damit ist das Drehregal 2 von den unteren und oberen Kupplungsmitteln gelöst, deren Endstellung aus den Fig. 7 und 9 hervorgeht, und lässt sich durch die Fördereinrichtung 39 an der in Fig. 1 dargestellten Frontseite des Gestells 1 aus diesem herausbewegen, sobald auch der Raststift 34 aus dem zuvor belegten Rastloch 11 im Fussteller 9 nach unten zurückgezogen worden ist.

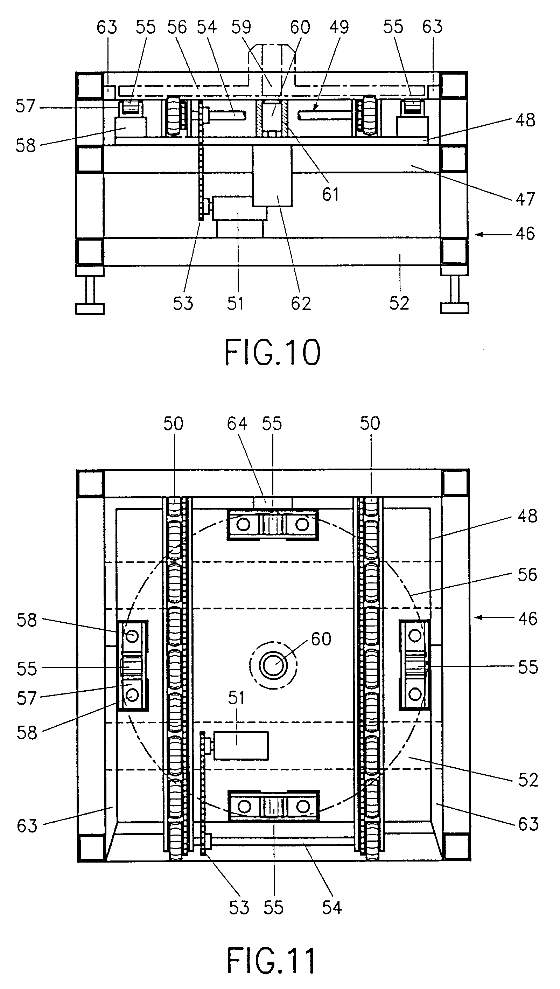

Zum Aufbau des in den Fig. 10 und 11 dargestellten Aufnahmeplatzes der Umladestation dient wiederum ein aus Vierkantrohren bestehendes Gestell 46 mit quadratischem Grundriss, das in seiner Höhe etwa dem durch den Rahmenteil 44 abgeschlossenen Unterteil des Magazingestells 1 (Fig. 1) entspricht. Auf einem mittleren Rahmenteil 47 des Gestells 46 ruht eine Grundplatte 48, welche eine Fördereinrichtung 49 mit horizontaler, durch zwei Rollensätzen 50 gebildeter Förderebene trägt. Die Fördereinrichtung 49 ist im wesentlichen gleich ausgebildet wie die Fördereinrichtung 39 des Magazins, wobei die horizontale Förderbahn derselben das gleiche Nieveau hat wie diejenige der Fördereinrichtung 39. Im vorliegenden Anwendungsfall ist auch der Antrieb der Fördereinrichtung 49 zeichnerisch dargestellt, und zwar ist ein Antriebsmotor 51 vorgesehen, welcher an einem tiefer liegenden Rahmenteil 52 des Gestells 46 befestigt ist und über einen Kettentrieb 53 eine gemeinsame Antriebswelle 54 der beiden Rollensätze 50 antreibt.

An dem gezeigten Aufnahmeplatz der Umladestation ist auch ein Drehgestell und eine Hubeinrichtung zum Umlagern eines Drehregals von der Fördereinrichtung 49 auf das Drehgestell und umgekehrt vorhanden, damit das Drehregal zum Umladen gedreht werden kann. Das Drehgestell umfasst einen Satz von vier im Kreis angeordneter Laufrollen 55, auf welche der strichpunktiert angedeuete Fussteller 56 des Dregregals zu liegen kommt. Jede Laufrolle 55 ist in einem Lagerbock 57 frei drehbar gelagert, an welchem zwei auf der Grundplatte 48 abgestützte Hubzylinder 58 angreifen, welche gemeinsam betätigt werden, um die Laufrollen 55 vom Niveau der Förderebene anzuheben bzw. auf dasselbe abzusenken. Zum Drehgestell gehört auch ein in die Zentriermuffe 59 des Fusstellers 56 einzugreifen bestimmter Achszapfen 60, welcher in einer oberhalb der Grundplatte 48 angeordneten Lagerbüchse 61 geführt und durch einen unterhalb der Grundplatte 48 angeordneten Hubzylinder 62 betätigbar ist. Dabei sind die Hubzylinder 58 einerseits und der Hubzylinder 62 andererseits getrennt steuerbar, damit die Laufrollen 55 und der Achszapfen 60 zu verschiedenen Zeitpunkten vertikal verschiebbar sind. Diese Möglichkeit wird vor allem beim Umlagern eines Drehregals von der Fördereinrichtung 49 auf das Drehgestell benutzt, indem zunächst der Achszapfen 60 angehoben wird, um das Drehregal zu zentrieren, und erst danach das Drehregal durch die Laufrollen 55 des Drehgestells von den Rollensätzen 50 der Fördereinrichtung 49 abgehoben wird. Aehnlich wie bei der Magazinstation wird auch hier das aufgesetzte Drehregal dadurch in den Zentrierbereich geführt, dass längs der Förderbahn der Fördereinrichtung 49 am Umfang des Fusstellers 55 wirksame Führungsschienen 63 und am Ende der Förderbahn ein Endanschlag 64 vorgesehen sind.

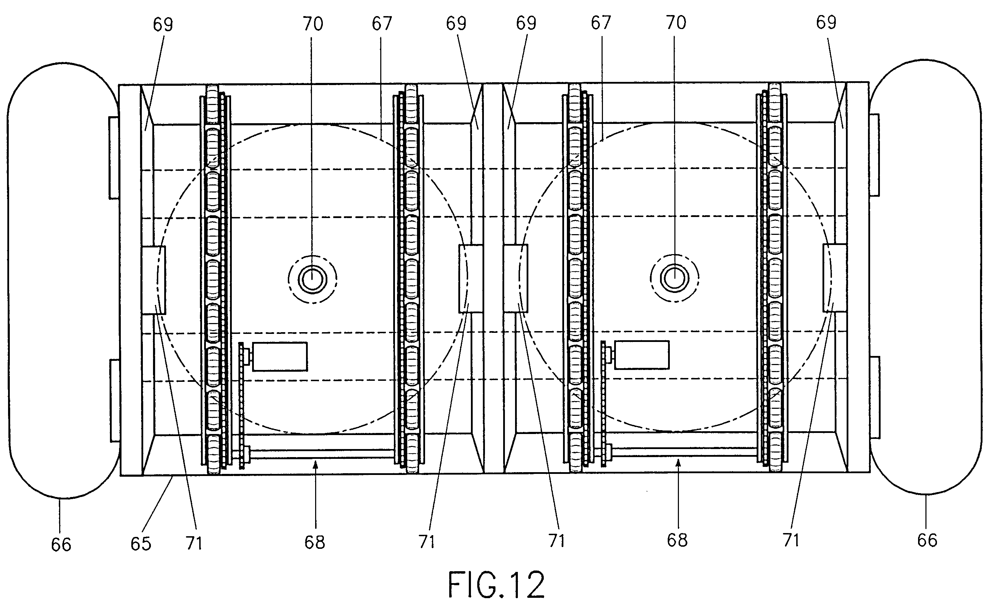

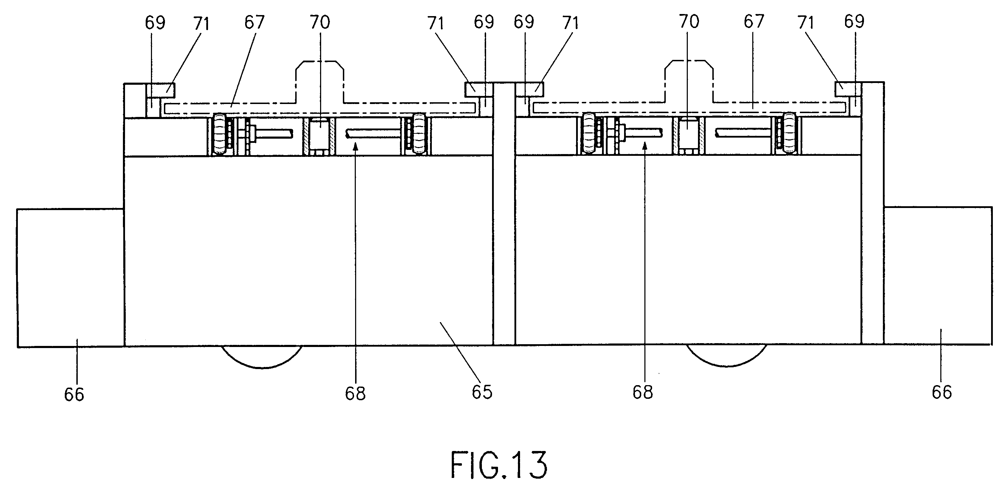

In den Fig. 12 und 13 ist ein Flurförderfahrzeug mehrheitlich schematisch dargestellt, wie es vornehmlich in automatisch betriebenen Transportsystemen angewandt wird. Die Mittel zum ferngesteuerten Betrieb solcher Flurförderfahrzeuge sind an sich bekannt und werden hier nicht näher erläutert. Der gesamte Unterbau des Fahrzeugs einschliesslich Fahrgestell ist mit 65 bezeichnet. An beiden Enden des Fahrzeugunterbaus 65 sind in ebenfalls bekannter Weise Puffer 66 vorgesehen.

Der Oberbau des Fahrzeugs umfasst zwei Aufnahmeplätze für je ein Drehregal, dessen Fussteller 67 strichpunktiert angedeutet ist. An jedem Aufnahmeplatz ist wiederum eine Fördereinrichtung 68 mit horizontaler Förderbahn von der bereits beschriebenen Art vorgesehen, wobei die Förderbahnen auch hier das gleiche Niveau haben wie diejenigen in der Magazinstation und in der Umladestation. Einzelheiten dieser Fördereinrichtungen können der Beschreibung zu den Fig. 10 und 11 entnommen werden. Die Aufnahmeplätze sind hier so eingerichtet, dass das Fahrzeug von beiden Seiten her beladen und entladen werden kann. Zu diesem Zweck erstrecken sich hier die am Umfang der Fussteller 67 wirksamen Führungsschienen 69 über die ganze Länge der Förderbahn bzw. über die ganze Breite des Fahrzeugs. Zur Fixierung der auf das Fahrzeug aufgesetzten Drehregale während des Transports sind einerseits im Zentrum der Aufnahmeplätze angeordnete, in gleicher Art wie die Achszapfen 60 in den Fig. 10 und 11 vertikal bewegliche Achszapfen 70 und andererseits den Fussteller 67 übergreifende Halteleisten 71 vorgesehen. Die Achszapfen 70 sind dazu bestimmt, in die Zentriermuffe des aufgesetzten Drehregals einzugreifen und dadurch das Drehregal gegen eine seitliche Verschiebung zu sichern, während die Halteleisten 71 ein Kippen des Drehregals verhindern.

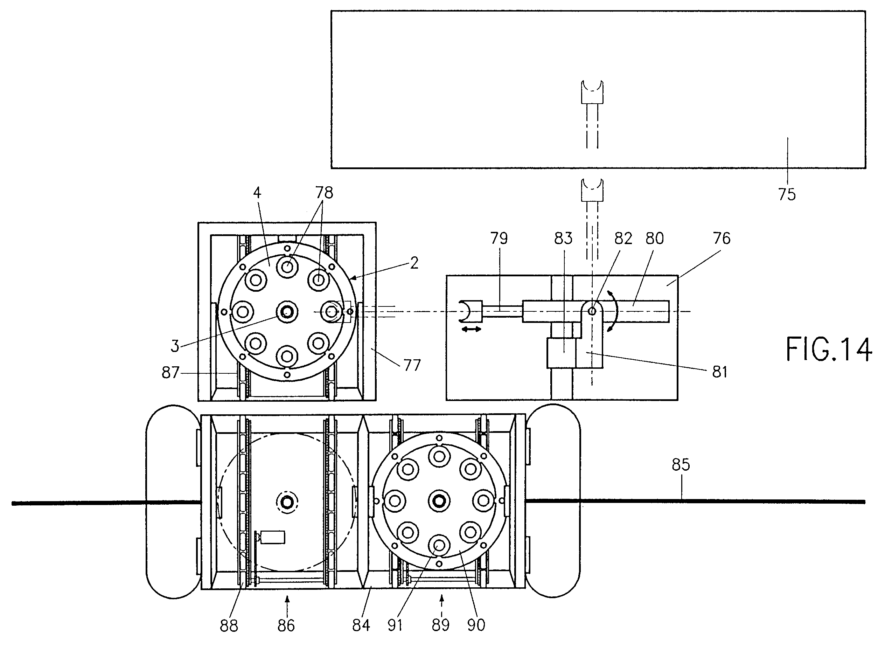

Die Fig. 14 zeigt schematisch als Beispiel für eine einfache Fabrikationsanlage die räumliche Anordnung einer Bearbeitungseinrichtung 75, eines Handhabungsgerätes 76 und eines Magazins 77 mit austauschbarem Drehregal 2 gemäss der in den Fig. 1 bis 9 dargestellten Bauart und darin gelagerten, symbolisch andeuteten Werkzeugen bzw. Werkstücken 78. Das Handhabungsgerät 76 ist mit drei gesteuerten Achsen ausgerüstet und besitzt einen Greifarm 79, welcher in einem Lagerteil 80 längsverschieblich gelagert ist. Der Lagerteil 80 ist an einem Schlitten 81 um die Achse 82 drehbar gelagert, welcher seinerseits an einer stationären Säule 83 vertikal verschiebbar gelagert ist. Die verschiedenen Bewegungsphasen des Greifarms 79 beim Werkzeug- bzw. Werkstückwechsel sind mit strichpunktierten Linien angedeutet. Die Fig. 14 zeigt deutlich, dass die Hilfseinrichtungen verhältnismässig wenig Stationsraum beanspruchen und das Handhabungsgerät 76 nur geringen Bewegungsraum benötigt. Dieser Vorteil ergibt sich daraus, dass auch für einen länger dauernden Betrieb der Fabrikationsanlage ein einziges Magazin 77 der beschriebenen Art ausreicht und sich somit beim Materialaustausch der Zugriff des Greifarms 79 auf dieses eine Magazin 77 beschränken kann.

Die Fig. 14 zeigt auch ein Flurförderfahrzeug 84, welches beispielsweise gemäss den Fig. 12 und 13 ausgebildet ist und in an sich bekannter Weise mit Hilfe einer Induktionsschleife 85 längs deren Verlauf nahe an die Magazinstation 77 herangeführt wird. In Fig. 14 befindet sich das Fahrzeug 84 in einer ersten Halteposition, in welcher sein freier Aufnahmeplatz 86 der Magazinstation genau gegenüberliegt, so dass das auszutauschende Drehregal 2 mit Unterstützung der betreffenden Fördereinrichtungen 87 und 88 aus der Magazinstation 77 auf das Fahrzeug 84 transferiert werden kann. An dem zweiten Aufnahmeplatz 89 befindet sich das für den Ersatz des Drehregals 2 bestimmte Drehregal 90, welches die zur Fortsetzung des Fabrikationsablaufs benötigten Werkzeuge bzw. Werkstücke 91 enthält. Durch Vorrücken des Fahrzeugs 84 wird der belegte Aufnahmeplatz auf die Magazinstation 77 ausgerichtet, um das neue Drehregal 90 an den inzwischen frei gewordenen Platz in der Magazinstation 77 zu transferieren. Der Austausch der Drehregale 2 und 90 kann auf diese Weise mit Hilfe entsprechender Steuerungseinrichtungen vollautomatisch durchgeführt werden.

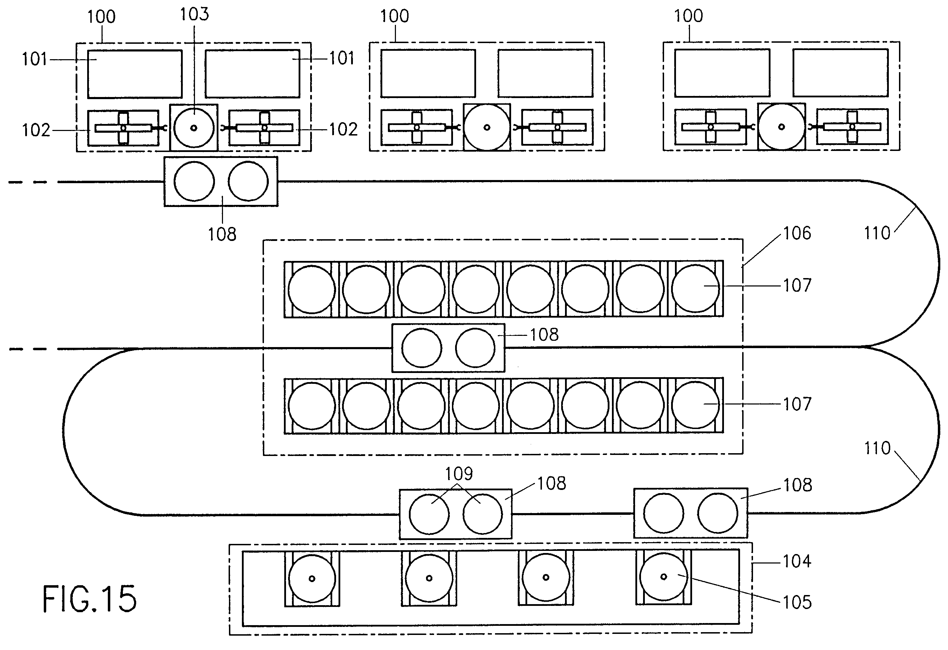

In Fig. 15 ist schematisch eine Fabrikationsanlage dargestellt, welche mehrere, z.B. drei Fertigungszellen 100 mit je zwei Bearbeitungseinrichtungen 101, zwei diesen einzeln zugeordneten Handhabungsgeräten 102 und einem gemeinsamen Magazin 103 für die Handhabungsobjekte, ferner eine Umladestation 104 mit z.B. vier Aufnahmeplätzen 105 und ein pufferlager 106 mit einer Mehrzahl von Aufnahmeplätzen 107 für austauschbare Drehregale umfasst. Für den Transport der Drehregale zwischen der Umladestation 104, dem Pufferlager 106 und den Fertigungszellen dienen automatisch betriebene und geführte Flurförderfahrzeuge 108 der beschriebenen Art mit je zwei Aufnahmeplätzen 109. Es können aber auch Flurförderfahrzeuge mit mehr als zwei Aufnahmeplätzen vorgesehen sein. Im vorliegenden Beispiel führt die durch Induktionsschleifen 110 bestimmte Fahrbahn der Fahrzeuge 108 den Fertigungszellen 100 entlang, so dass die Fertigungszellen verkehrsmässig direkt miteinander verbunden sind und die Drehregale mit den darin gelagerten Werkzeugen bzw. Werkstücken, der Reihenfolge verschiedener Arbeitsprozesse entsprechend, von einer Fertigungszelle unmittelbar zu der nächsten Fertigungszelle weitergereicht werden können. Selbstverständlich können in anderen Anwendungsfällen die Fertigungszellen 100 auch sternförmig mit der Umladestation 104 bzw. mit dem pufferlager 106 verbunden sein.

## Patentansprüche

1. Fabrikationsanlage mit wenigstens einer Fertigungszelle (100), welche wenigstens eine Bearbeitungseinrichtung (75; 101), eine der Fertigungszelle zugeordnete Magazinstation (77; 103) mit mehreren, als transportfähige Baueinheiten ausgebildeten Drehregalen (2) zur Aufnahme von Werkzeugen und/oder Werkstücken (91) und ein Handhabungsgerät (76; 102) zur Bedienung der Magazinstation umfasst, wobei jedes Drehregal (2) mehrere, rund um eine drehbare Säule (3) übereinander angeordnete Lagerebenen (4) und im unteren Säulenbereich einen Auflageteller (9) aufweist und austauschbar in einen stationären, die Mittel zum Betrieb eines Drehregals (2) enthaltenden Teil der Magazinstation (77; 103) einsetzbar ist, ferner mit einer von der Fertigungszelle (100) getrennten Umladestation (104) zum Beladen und Entladen der Drehregale (2) und wenigstens einem Flurförderfahrzeug (84; 108) für den Transport der Drehregale (2) von der Umladestation (104) zur Magazinstation (77;103) und umgekehrt, **dadurch gekennzeichnet**, dass die Magazinstation (77; 103) in unmittelbarer Reichweite eines für den automatischen Werkzeug- bzw. Werkstückwechsel an der Bearbeitungseinrichtung (75, 101) bestimmten Handhabungsgerätes (76; 102) angeordnet ist und am stationären Teil einen Aufnahmeplatz für ein austauschbares Drehregal (2) aufweist, dass jeweils jedes Drehregal (2) am unteren Ende der Säule (3) einen die Antriebs- und Transportbasis bildenden Fussteller (9; 56; 67) aufweist, der gleichzeitig als Auflageteller funktioniert, dass aus dem Flurförderfahrzeug (84; 108) und in der Umladestation (104) Aufnahmeplätze (86, 89, 109; 105) für je ein Drehregal (2) eingerichtet sind, wobei die betreffenden Aufnahmeplätze am Fussteller der Drehregale wirksame Halterungsmittel (70, 71; 60) für den Transport bzw. für die Handhabung der Drehregale in der Umladestation aufweisen, und dass am Aufnahmeplatz der Magazinstation und an den Aufnahmeplätzen (86, 89, 109; 105) des Flurförderfahrzeugs (84; 108) und der Umladestation (108) je eine Fördereinrichtung (39, 68, 49) mit horizontaler Förderbahn für den Transfer von in aufrechter Stellung darauf abgestellten Drehregalen (2) von der Magazinstation (103) zum Flurförderfahrzeug (108) und von diesem zur Umladestation (104) und umgekehrt vorgesehen ist, wobei die Förderbahnen aller Fördereinrichtungen das gleiche Niveau haben und die Fördereinrichtungen bei einem Transfer jeweils paarweise zusammenarbeiten.

2. Fabrikationsanlage nach Anspruch 1, dadurch gekennzeichnet, dass die Fördereinrichtungen (39, 68, 49) Rollenförderer mit gemeinsam angetriebenen Rollen sind.

3. Fabrikationsanlage nach Anspruch 1, dadurch gekennzeichnet, dass die Förderbahn der Fördereinrichtungen (39, 49), welche der Magazinstation und der Umladestation zugeordnet sind, einen Endanschlag (45, 64) aufweisen, welcher das auflaufende Drehregal (2) im Wirkungsbereich der jeweiligen Halterungsmittel (21;60) stillsetzt.

4. Fabrikationsanlage nach Anspruch 1, dadurch gekennzeichnet, dass längs der Förderbahn jeder Fördereinrichtung (39, 49, 68) am Umfang des Fusstellers (9; 56; 67) wirksame Führungsorgane (43; 63; 69) für die Längsführung des Drehregals (2) vorhanden sind.

5. Fabrikationsanlage nach Anspruch 1, dadurch gekennzeichnet, dass längs der Förderbahn der dem Flurförderfahrzeug zugeordneten Fördereinrichtung (68) den Fussteller (67) des aufgesetzten Drehregals übergreifende Halteleisten (71) vorgesehen sind.

6. Fabrikationsanlage nach Anspruch 1, dadurch gekennzeichnet, dass an jedem Aufnahmeplatz (105) der Umladestation (104) ein Drehgestell (55, 60) und eine Hubeinrichtung (58, 62) zum Umlagern eines Drehregals (2) von der Fördereinrichtung (49) auf das Drehgestell und umgekehrt vorhanden sind.

7. Fabrikationsanlage nach Anspruch 6, dadurch gekennzeichnet, dass ein mit dem Fussteller (9; 56) auf das Drehgestell (55, 60) aufgesetztes Drehregal (2) frei drehbar ist.

8. Fabrikationsanlage nach Anspruch 7, dadurch gekennzeichnet, dass das Drehgestell (55, 60) einen Satz im Kreis angeordneter Laufrollen (55) und einen in eine Zentriermuffe (59) am Fussteller (56) eines Drehregals (2) einzugreifen bestimmten Achszapfen (60) aufweist, wobei der Laufrollensatz und der Achszapfen durch die Hubeinrichtung (58, 62) einzeln vertikal verschiebbar sind.

9. Fabrikationsanlage nach Anspruch 1, dadurch gekennzeichnet, dass die Magazinstation (77; 103) ein Gestell (1) aufweist, an dem lösbare, mit den beiden Enden der drehbaren Säule (3) des Drehregals (2) zusammenarbeitende Kupplungsmittel (14, 21; 26) für die Lagerung und den Antrieb des Drehregals (2) angebracht sind,

10. Fabrikationsanlage nach Anspruch 9, dadurch gekennzeichnet, dass die drehbare Säule (3) des Drehregals (2) am Fussteller (9) eine nach unten offene Zentriermuffe (12) und an ihrem oberen Ende einen Zentrierkonus (13) aufweist, dass sich im unteren Teil des Gestells (1) ein angetriebener, mit einem nach oben gerichteten Zentrierzapfen (21) versehener Drehschemel (14) befindet, auf den das Drehgestell (2) aufgesetzt ist, wobei der Fussteller (9) des Drehregals auf dem Drehschemel (14) ruht und dessen Zentrierzapfen (21) in die Zentriermuffe (12) des Fusstellers (9) eingreift, dass an der Oberseite des Gestells (1) ein Wellenstumpf (26) mit nach unten offener konischer Zentrierbohrung (27) für die Aufnahme des Zentrierkonus (13) der Säule (3) frei drehbar gelagert ist, und dass der Drehschemel (14) samt Drehantrieb (19, 20) an einem Hubtisch (17) gelagert ist, welcher das eingesetzte Drehregal (2) unter Krafteinwirkung nach oben drückt, so dass dessen Säule (3) zwischen dem Drehschemel (14) und dem Wellenstumpf (26) formschlüssig und positionsgerecht gehalten und der Fussteller (9) mit dem Drehschemel (14) reibschlüssig verbunden ist.

11. Fabrikationsanlage nach Anspruch 10, dadurch gekennzeichnet, dass das Drehregal (2) aus der Betriebslage mit dem Fussteller (9) auf die Förderbahn absenkbar ist, wobei die Kupplungsmittel (14, 21, 26) beim Lösen vom Drehregal (2) dieses für eine Bewegung in Förderrichtung freigeben.

12. Fabrikationsanlage nach Anspruch 11, dadurch gekennzeichnet, dass der Hubtisch (17) aus der Betriebslage so weit absenkbar ist, dass der Zentrierzapfen (21) am Drehschemel (14) nach dem Aufsetzen des Drehregals (2) auf die Fördereinrichtung (39) mit der Zentriermuffe (12) am unteren Säulenende ausser Eingriff kommt, und dass der Wellenstumpf (26) nach oben wegziehbar ist, um den Zentrierkonus (13) am oberen Säulenende mit der Zentrierbohrung (27 am Wellenstumpf (26) ausser Eingriff zu bringen, so dass die Lösung des Drehregals (2) von den Kupplungsmitteln (14, 21, 26) in zwei Phasen erfolgen kann, wobei in der ersten Phase das Drehregal (2) unter Fortwirkung der oberen Kupplunsmittel (26) mit seinem Fussteller (9) auf die Fördereinrichtung (39) aufgesetzt wird und die unteren Kupplungsmittel (14, 21) gelöst werden und in der anschliessenden zweiten Phase die oberen Kupplungsmittel (26) vom Drehregal (2) gelöst werden.

13. Fabrikationsanlage nach Anspruch 1, dadurch gekennzeichnet, dass automatisch betriebene und geführte Flurförderfahrzeuge (84; 108) und für diese Fahrzeuge Fahrbahnen (85; 110) vorgesehen sind, welche die Magazinstationen (103) verschiedener Fertigungszellen (100) untereinander und mit der Umladestation (104) verbinden.

## Claims

1. Manufacturing installation with at least one manufacturing cell (100), which comprises at least one machining device (75; 101), a magazine station (77; 103) associated with the manufacturing cell and having a plurality of sets of rotary shelving (2), constructed as transportable components, for receiving tools and/or work-pieces (91) and a handling appliance (76; 102) for servicing the magazine station, each set of rotary shelving (2) comprising a plurality of storage surfaces (4) arranged one above the other around a rotary column (3) and in the lower region of the column a support plate (9) and which can be inserted exchangeably in a stationary part of the magazine station (77; 103) containing the means for operating a set of rotary shelving (2), furthermore with a reloading station (104) separate from the manufacturing cell (100), for loading and unloading the sets of rotary shelving (2) and at least one conveying vehicle (84; 108) travelling on the floor for conveying the sets of rotary shelving (2) from the reloading station (104) to the magazine station (77; 103) and vice versa, characterised in that the magazine station (77; 103) is located in the immediate operating range of a handling appliance (76; 102) intended for automatically changing the tool or work-piece at the machining device (75, 101) and on the stationary part comprises a receiving location for an exchangeable set of rotary shelving (2), that respectively each set of rotary shelving (2) comprises at the lower end of the column (3) a base plate (9; 56; 67) forming the driving and conveying base, which simultaneously operates as a support plate, that installed on the conveying vehicle (84; 108) travelling on the floor and in the reloading station (104) are receiving locations (86, 89, 109; 105) for respectively one set of rotary shelving (2), the respective receiving locations on the base plate of the set of rotary shelving comprising active mounting means (70, 71; 60) for the conveyance or for the handling of the sets of rotary shelving in the reloading station, and that provided at the receiving location of the magazine station and at the receiving locations (86, 89, 109; 105) of the conveying vehicle (84; 108) travelling on the floor and of the reloading station (108) is respectively one conveying device (39, 68, 49) with a horizontal conveying path for the transfer of sets of rotary shelving (2) deposited thereon in an upright position, from the magazine station (103) to the conveying vehicle (108) travelling on the floor and from the latter to the reloading station (104) and vice versa, the conveying paths of all conveying devices having the same level and the conveying devices cooperating respectively in pairs at the time of a transfer.

2. Manufacturing installation according to Claim 1, characterised in that the conveying devices (39, 68, 49) are roller conveyors with jointly driven rollers.

3. Manufacturing installation according to Claim 1, characterised in that the conveying path of the conveying devices (39, 49), which are associated with the magazine station and the reloading station, comprise an end stop (45, 64), which stops the approaching set of rotary shelving (2) in the range of action of the respective mounting means (21; 60).

4. Manufacturing installation according to Claim 1, characterised in that provided along the conveying path of each conveying device (39, 49, 68) are guide members (43; 63, 69) active on the periphery of the base plate (9; 56; 67), for the longitudinal guidance of the set of rotary shelving (2).

5. Manufacturing installation according to Claim 1, characterised in that provided along the conveying path of the conveying device (68) associated with the conveying vehicle travelling on the floor are retaining strips (71) engaging over the base plate (67) of the deposited set of rotary shelving.

6. Manufacturing installation according to Claim 1, characterised in that provided at each receiving location (105) of the reloading station (104) is a bogie (55, 60) and a lifting device (58, 62) for shifting a set of rotary shelving (2) from the conveying device (49) to the bogie and vice versa.

7. Manufacturing installation according to Claim 6, characterised in that a set of rotary shelving (2) placed by the base plate (9; 56) on the bogie (55, 60) is free to rotate.

8. Manufacturing installation according to Claim 7, characterised in that the bogie (55, 60) comprises a set of small rollers (55) arranged in a circle and an axle journal (60) intended to engage in a centering sleeve (59) on the base plate (56) of a set of rotary shelving (2), the set of small rollers and the axle journal being individually vertically displaceable due to the lifting device (58, 62).

9. Manufacturing installation according to Claim 1, characterised in that the magazine station (77; 103) comprises a frame (1) on which are located releasable coupling means (14, 21; 26) cooperating with the two ends of the rotary column (3) of the set of rotary shelving (2), for the mounting and drive of the set of rotary shelving (2).

10. Manufacturing installation according to Claim 9, characterised in that the rotary column (3) of the set of rotary shelving (2) comprises on the base plate (9) a centering sleeve (12) which is open towards the bottom and at its upper end a centering cone (13), that located in the lower part of the frame (1) is a driven pivoted bogie (14) provided with an upwardly directed centering journal (21), on which pivoted bogie the set of rotary shelving (2) is placed, the base plate (9) of the set of rotary shelving resting on the pivoted bogie (14) and its centering journal (21) engaging in the centering sleeve (12) of the base plate (9), that mounted to rotate freely on the upper side of the frame (1) is a shaft butt (26) with a conical centering bore (27) open in a downwards direction, for receiving the centering cone (13) of the column (3), and that the pivoted bogie (14) together with the rotary drive (19, 20) is mounted on a lifting table (17), which pushes the inserted set of rotary shelving (2) upwards under the action of force, so that its column (3) is held in a form-locking manner and in the correct position between the pivoted bogie (14) and the shaft butt (26) and the base plate (9) is frictionally connected to the pivoted bogie (14).

11. Manufacturing installation according to Claim 10, characterised in that the set of rotary shelving (2) may be lowered from the operating position with the base plate (9) onto the conveying path, at the time of release from the set of rotary shelving (2), coupling means (14, 21, 26) releasing the latter for a movement in the conveying direction.

12. Manufacturing installation according to Claim 11, characterised in that the lifting table (17) can be lowered so far from the operating position that after placing the set of rotary shelving (2) on the conveying device (39), the centering journal (21) on the pivoted bogie (14) comes out of engagement with the centering sleeve (12) at the lower end of the column, and that the shaft butt (26) can be withdrawn upwards, in order to bring the centering cone (13) at the upper end of the column out of engagement with the centering bore (27) on the shaft butt (26), so that the release of the set of rotary shelving (2) from the coupling means (14, 21, 26) can take place in two phases, in the first phase the set of rotary shelving (2), under the continuing action of the upper coupling means (26), being placed by its base plate (9) on the conveying device (39) and the lower coupling means (14, 21) being released and in the subsequent second phase, the upper coupling means (26) being released from the set of rotary shelving (2).

13. Manufacturing installation according to Claim 1, characterised in that automatically operated and guided conveying vehicles (84; 108) travelling on the floor and for these vehicles tracks (85; 110) are provided, which connect the magazine stations (103) of different manufacturing cells (100) to each other and to the reloading station (104).

## Revendications

1. Installation de fabrication, comportant au moins une cellule de fabrication (100) qui comprend au moins un dispositif de traitement de pièce (75 ; 101), un poste-magasin (77 ; 103), associé à la cellule de fabrication et comportant plusieurs rayonnages rotatifs (2) réalisés sous forme d'unités structurelles transportables et servant à recevoir des outils et/ou des pièces (91), et un appareil de manutention (76 ; 102) destiné à desservir le poste-magasin, chaque rayonnage rotatif (2) comprenant plusieurs niveaux de rangement (4), disposés les uns au-dessus des autres autour d'une colonne rotative (3) et, dans la zone inférieure de la colonne, un plateau d'appui (9), tandis que ce rayonnage rotatif (2) est agencé de façon à pouvoir être placé, d'une manière échangeable, dans une partie fixe du poste-magasin (77 ; 103) qui contient les moyens servant au service du rayonnage rotatif (2), l'installation de fabrication comportant en outre un poste de chargement-déchargement (104), réalisé d'une manière séparée vis-à-vis de la cellule de fabrication (100) et servant au chargement et au déchargement des rayonnages rotatifs (2), et au moins un chariot de convoyeur au sol (84 ; 108) servant à transporter les rayonnages rotatifs (2) du poste de chargement-déchargement (104) au poste-magasin (77 ; 103) et vice versa, caractérisée en ce que le poste-magasin (77 ; 103) est disposé dans le rayon d'action directe d'un appareil de manutention (76 ; 102) servant à l'échange automatique d'outil ou de pièce sur le dispositif de traitement de pièce (75 ; 101) et comprend, à l'endroit de la partie fixe, un emplacement de réception d'un rayonnage rotatif (2) échangeable, en ce que chaque rayonnage rotatif (2) comporte, à l'extrémité inférieure de la colonne (3), un plateau inférieur (9 ; 56 ; 67) respectif constituant la base d'entraînement et de transport et jouant en même temps le rôle de plateau d'appui, en ce que, sur le chariot de convoyeur au sol (84 ; 108) et au poste de chargement-déchargement (104), il est installé, dans chacun, un emplacement de réception (86, 89, 109 ; 105) pour un rayonnage rotatif (2), les emplacements de réception considérés comportant des moyens de fixation (70, 71 ; 60) agissant sur le plateau inférieur des rayonnages rotatifs et permettant respectivement le transport et la manutention des rayonnages rotatifs dans le poste de chargement-déchargement, et en ce qu'à l'emplacement de réception du poste-magasin et aux emplacements de réception (86, 89, 109 ; 105) du chariot de convoyeur au sol (84 ; 108) et du poste de chargement-déchargement (108), il est prévu, pour chacun, un dispositif convoyeur (39, 68, 49) comportant une voie convoyeuse horizontale pour le transfert de rayonnages rotatifs (2), rangés en position verticale sur cette voie convoyeuse, du poste-magasin (103) au chariot de convoyeur au sol (108) et de ce chariot au poste de chargement-déchargement (104) et vice versa, les voies convoyeuses de tous les dispositifs convoyeurs ayant le même niveau et les dispositifs convoyeurs coopérant chacun deux à deux lors d'un transfert.

2. Installation de fabrication selon la revendication 1, caractérisée en ce que les dispositifs convoyeurs (39, 68, 49) sont des convoyeurs à galets comportant des galets à entraînement commun.

3. Installation de fabrication selon la revendication 1, caractérisée en ce que les voies convoyeuses des dispositifs convoyeurs (39, 49) qui sont associés au poste-magasin et au poste de chargement-déchargement comportent une butée d'extrémité (45, 64) qui immobilise, dans la zone d'action des moyens de fixation (21 ; 60) correspondants, le rayonnage rotatif (2) qui accoste le poste.

4. Installation de fabrication selon la revendication 1, caractérisée en ce que, le long de la voie convoyeuse de chaque dispositif convoyeur (31, 49, 68), il est prévu des organes de guidage (43 ; 63 ; 69) agissant sur la périphérie du plateau inférieur (9 ; 56 ; 67) et servant au guidage longitudinal du rayonnage rotatif (2).

5. Installation de fabrication selon la revendication 1, caractérisée en ce que, le long de la voie convoyeuse du dispositif convoyeur (68) associé au chariot de convoyeur au sol, il est prévu des rebords de maintien (71) qui viennent en prise au-dessus du plateau inférieur (67) du rayonnage rotatif qui est posé.

6. Installation de fabrication selon la revendication 1, caractérisée en ce qu'à chaque emplacement de réception (105) du poste de chargement-déchargement (104), il est prévu un châssis d'entraînement en rotation (55, 60) et un dispositif de soulèvement (58, 62) servant à faire passer un rayonnage rotatif (2) du dispositif convoyeur (49) au châssis d'entraînement en rotation et vice versa.

7. Installation de fabrication selon la revendication 6, caractérisée en ce qu'un rayonnage rotatif (2) posé par son plateau inférieur (9 ; 56) sur le châssis d'entraînement en rotation (55, 60) peut être entraîné en rotation librement.

8. Installation de fabrication selon la revendication 7, caractérisée en ce que le châssis d'entraînement en rotation (55, 60) comporte un jeu de galets de roulement (55), disposés en cercle, et un pivot (60) apte à s'emboîter dans un manchon de centrage (59) situé sur le plateau inférieur (66) d'un rayonnage rotatif (2), le jeu de galets de roulement et le pivot étant agencés de façon à pouvoir être déplacés verticalement en propre au moyen du dispositif de soulèvement (58, 62).

9. Installation de fabrication selon la revendication 1, caractérisée en ce que le poste-magasin (77 ; 103) comporte un bâti (1) sur lequel sont montés des moyens d'accouplement (14, 21 ; 26) libérables qui coopèrent avec les deux extrémités de la colonne rotative (3) du rayonnage rotatif (2) et qui servent au montage à palier et à l'entraînement du rayonnage rotatif (2).

10. Installation de fabrication selon la revendication 9, caractérisée en ce que la colonne rotative (3) du rayonnage rotatif (2) comporte, sur le plateau inférieur (9), un manchon de centrage (12) ouvert vers le bas et, à son extrémité supérieure, un cône de centrage (13), en ce qu'à la partie inférieure du bâti (1), il est disposé une sellette d'accouplement pivotante (14) qui est entraînée et est pourvue d'un pivot de centrage (31) dirigé vers le haut et sur laquelle le rayonnage rotatif (2) est posé, le plateau inférieur (9) du rayonnage rotatif reposant sur la sellette d'accouplement pivotante (14) et le pivot de centrage (21) de cette sellette s'emboîtant dans le manchon de centrage (12) du plateau inférieur (9), en ce qu'à la partie supérieure du bâti (1), un tronçon d'arbre (26) comportant un trou conique de centrage (27) ouvert vers le bas et servant à recevoir le cône de centrage (13) de la colonne (3) est monté de façon à pouvoir pivoter librement et en ce que la sellette d'accouplement pivotante (14) est montée, y compris un entraînement en rotation (19, 20), sur une table de soulèvement (17) qui repousse vers le haut, sous l'action d'une force, le rayonnage rotatif (2) posé, de sorte que la colonne (3) de ce rayonnage est maintenue, par complémentarité de formes et dans une position convenable, entre la sellette d'accouplement pivotante (14) et le tronçon d'arbre (26) et que le plateau inférieur (9) est rendu solidaire de la sellette d'accouplement pivotante (14) par friction.

11. Installation de fabrication selon la revendication 10, caractérisée en ce que le rayonnage rotatif (2) est agencé de façon à pouvoir être abaissé, par son plateau inférieur (9), de sa position de service jusque sur la voie convoyeuse, tandis que, lors de la séparation du rayonnage rotatif (2), les moyens d'accouplement (14, 21, 26) libèrent ce rayonnage rotatif (2) en vue d'un déplacement suivant la direction du dispositif convoyeur.

12. Installation de fabrication selon la revendication 11, caractérisée en ce que la table de soulèvement (17) est agencée de façon à pouvoir être abaissée, à partir de la position de service, d'une distance telle qu'une fois le rayonnage rotatif (2) posé sur le dispositif convoyeur (39), le pivot de centrage (21) disposé sur la sellette d'accouplement pivotante (14) n'est plus en prise avec le manchon de centrage (12) situé à l'extrémité inférieure de la colonne et en ce que le tronçon d'arbre (26) est agencé de façon à pouvoir être rétracté vers le haut afin d'amener le cône de centrage (13) disposé à l'extrémité supérieure de la colonne hors de prise avec le trou de centrage (27) situé sur le tronçon d'arbre (26), de sorte que la séparation du rayonnage rotatif (2) vis-à-vis des moyens d'accouplement (14, 21, 26) peut avoir lieu en deux phases, dans la première desquelles, sous l'action des moyens supérieurs d'accouplement (26), le rayonnage rotatif (2) est posé, par son plateau inférieur (9), sur le dispositif convoyeur (39) et les moyens inférieurs d'accouplement (14, 21) sont désaccouplés, tandis que, dans la seconde phase qui suit, les moyens supérieurs d'accouplement (26) sont séparés du rayonnage rotatif (2).

13. Installation de fabrication selon la revendication 1, caractérisée en ce qu'il est prévu des chariots de convoyeur au sol (84 ; 108), mis en service et guidés d'une manière automatique, et des voies (85 ; 110) de circulation de ces véhicules qui relient les postes-magasins (103) de différentes cellules de fabrication (100) entre eux et avec le poste de chargement-déchargement (104).
